(19) Europäisches Patentamt

European Patent Office

Office européen des brevets

(11) **EP 0 984 274 A2**

(12) **EUROPEAN PATENT APPLICATION**

(43) Date of publication:
**08.03.2000 Bulletin 2000/10**

(51) Int. Cl.[7]: **G01N 27/04**, B01J 8/24,
C10G 11/18

(21) Application number: **99116790.9**

(22) Date of filing: **31.08.1999**

(84) Designated Contracting States:
**AT BE CH CY DE DK ES FI FR GB GR IE IT LI LU
MC NL PT SE**
Designated Extension States:
**AL LT LV MK RO SI**

(30) Priority: **04.09.1998 US 146991**

(71) Applicants:
• **Bayer Inc.
Sarnia, ON N7T 7M2 (CA)**
• **THE UNIVERSITY OF WESTERN ONTARIO
London, Ontario N6A 5B8 (CA)**

(72) Inventors:
• **Puskas, Judit E.
London, Ontario N6C 3Z6 (CA)**
• **Barghi, Shahzad
London, Ontario N6G 3K1 (CA)**

(74) Representative:
**Feldhues, Michael L.F., Dr. et al
Bayer Aktiengesellschaft,
Konzernbereich RP,
Patente und Lizenzen
51368 Leverkusen (DE)**

(54) **Characterization of heterogeneous catalysts by electrical measurements**

(57) This invention is directed to a method of monitoring the relative activity of various heterogeneous catalysts by analysing their bulk electrical properties such as specific conductivity or resistance. The difference between the resistance of fresh and spent catalysts is to be large (as high as four orders of magnitude). These large differences make this invention a very sensitive indicator of changes that may happen at the surface and/or in the bulk of the catalyst. The simplicity of this new invention renders it to be a sensitive potential on-line testing method of catalyst activity.

EP 0 984 274 A2

Description

**FIELD OF THE INVENTION**

The present invention is concerned with heterogenous catalysts, methods to determine their activity, and more particularly, to rapid degree of activity detection.

**BACKGROUND OF THE INVENTION**

The activity of heterogeneous catalysts has traditionally been assessed by chemical measurements. For instance, the activity of potassium-promoted $Fe_2O_3$ catalyst used to convert ethyl benzene to styrene, can be measured by the amount of styrene produced by a unit (weight or volume) amount of catalyst (J. Matsui, T. Sodesawa and F. Nozaki: Applied Catalysis 51, 203 (1989)). The catalyst is considered exhausted when the production of the desired compound falls below a predetermined limit. In industrial practice, the reactor temperature is increased to compensate for the decreased activity of the catalyst, and the reactor is taken off-line when the reactor temperature reaches an upper limit (K.M. Sundaram, H. Sardian, J.M. Ferandez-Baujin and J.M. Hildreth: Hydrocarbon Processing, January 1991, 93). Depending on the particular application, the exhausted catalyst then is discarded or regenerated. The "goodness" of the regeneration is tested in the laboratory using a chemical reaction, or a specific chemical or physical characterization of the active sites on the catalyst. For instance, the activity of the above mentioned potassium-promoted $Fe_2O_3$ was correlated with the potassium content, and the effect of carbonation was shown to be minor. In the case of other catalytic processes, studies showed a correlation between the acidic and catalytic properties of many inorganic solids (K. Tanabe: "Solid Acids and Bases", Academic Press, N.Y. 1970). In one particular and most relevant example, the catalytic activity of binary metal oxides ($Al_2O_3$ + ZnO) was investigated by acid-base titrations, X-ray and IR spectroscopy, and TGA and DTA measurements (M.A. Mousa, E.M. Diefallah, A.A. Abdel Fattah, Z.A. Omran: J. Mater, Sci. 25, 3067 (1990)). The specific electrical conductivity of the catalyst was measured and correlated with with the ZnO content of the catalyst. At lower than 1000 °C calcination temperatures higher ZnO content showed higher conductivity, while at a 1000 °C calcination temperature a minimum conductivity was observed at 50% ZnO content. The conductivity of pure $Al_2O_3$ was reported to be $\sigma * = 1.0 \times 10^{-13}$ (14 °C); $3.3 \times 10^{-9}$ (300 °C); and $2.9 \times 10^{-4}$ (800 °C) $[\Omega^{-1}cm^{-1}]$ (CRC Handbook of Chemistry and Physics 76th Ed., D.R. Lide Editor-in Chief, CRC Press Inc. N.Y. (1995)).

The conductivity increase in the lower calcination temperature range was explained by the increase of the $Al_i^{3+}$ ion concentration with increasing ZnO content, which is reported to be the charge carrier in $Al_2O_3$. The catalytic activity of the $Al_2O_3$ + ZnO catalysts with varying amount of ZnO (0-100 wt %) was investigated using the chemical reaction of hydrogen peroxide decomposition. The catalytic activity of the fresh catalysts was then correlated with the ZnO content. The catalytic activity increased with increasing ZnO content, reaching a maximum value at about 30% ZnO, dropping to a minimum at 50% ZnO and going back to the maximum above 80% ZnO for all three calcination temperatures investigated. Therefore the electrical conductivity of these catalysts was found not to correlate with catalytic activity. The conductivity of the catalyst during and after the reaction, and the conductivity of the exhausted (spent) catalyst was not investigated. Table 1 is illustrative of conductivity data obtained in the prior art.

TABLE 1

| ZnO mol% | Calcination temperature[°C] | | |
|---|---|---|---|
| | **300** | **600** | **1000** |
| | Conductivity ($\sigma$*) $[\Omega^{-1}cm^{-1}]$ | | |
| 0 | $1.1 \times 10^{-11}$ | $9.2 \times 10^{-9}$ | $3.7 \times 10^{-8}$ |
| 15 | $1.4 \times 10^{-11}$ | $9.4 \times 10^{-9}$ | $1.2 \times 10^{-8}$ |
| 30 | $4.6 \times 10^{-11}$ | $3.4 \times 10^{-8}$ | $1.0 \times 10^{-7}$ |
| 50 | $1.5 \times 10^{-9}$ | $5.1 \times 10^{-8}$ | $2.5 \times 10^{-9}$ |
| 70 | $1.8 \times 10^{-9}$ | $1.4 \times 10^{-6}$ | $6.1 \times 10^{-6}$ |
| 85 | $1.8 \times 10^{-7}$ | $5.0 \times 10^{-4}$ | $1.2 \times 10^{-8}$ |
| 100 | $1.2 \times 10^{-6}$ | $5.5 \times 10^{-4}$ | $3.7 \times 10^{-3}$ |

Conductivity measurements are used to monitor ionic chemical reactions (e.g., ionic polymerizations) in solution. However, the measurements are very difficult and the changes are usually very small. Attempts were made to follow the kinetics of ionic polymerizations, but the difficulties mentioned above rendered this method quite impractical. (J.E. Puskas, S. Smith-Kehl and B. Cass: Polymer Preprints 37, 355 (1996); L. Balogh, L. Fabian, I. Majoros and T. Kelen: Polym. Bull. 23, 75 (1990); D.W. Gratton, P.H. Plesch: Electroanal. Chem. 178, 2235 (1977); R.H. Biddulph, P.H. Plesch: Chem. Ind. 1482 (1959)).

Conductivity measurements in the solid phase are relatively easy and are used to characterize materials containing ionic species. For instance, the electrical conductivity of pure and doped $Fe_2O_3$, and the effect of gamma-irradiation on the electrical conductivity was studied (M.A. Mousa, E.A. Gomaa, A.A. El-Khouly and A.A.M. Aly: Mater. Chem. Phys. 11, 433 (1984)). Doping either increased or decreased the electrical conductivity of pure $Fe_2O_3$ ($\sigma$ * = 1.5 x $10^{-6}$ [$\Omega^{-1}cm^{-1}$]), depending on the type and amount of doping elements. Gamma-irradiation increased the conductivity of pure $Fe_2O_3$, which in turn decreased upon annealing. Higher doses caused higher conductivity increases, which was explained by increasing charge carrier ($Fe^{2+}$) concentrations. The above mentioned paper investigated these oxides in terms of semiconducting properties. Inorganic oxides such as $Fe_2O_3$ and $Al_2O_3$ alone or as carriers are often used as heterogeneous catalysts.

There remains a real need to develop methods which can monitor the relative activity or degree of activity of a catalyst and which are feasible on a large scale and are cost-effective. The present invention addresses the problems of the prior art by employing novel methods to detect subtle changes on the surface and/or in the bulk of heterogeneous catalysts.

## SUMMARY OF THE INVENTION

The present invention is directed to a method of monitoring the relative activity of the catalyst at various stages in a heterogeneous catalytic process by measuring an electrical property of the catalyst which relates to conductivity of the catalyst, and correlating level of conductivity with level of catalyst exhaustion or optimum regeneration.

According to another aspect of the invention, the method is used as an on-line indicator of catalyst activity in industrial catalytic processes.

In a preferred embodiment, several electrodes are placed within a packed bed to be used as an indicator of progressive catalyst exhaustion throughout the bed. The difference between the conductivity of a single bead and that of a packed bed of the same beads may be used as a measure of the void.

## BRIEF DESCRIPTION OF THE DRAWINGS

The invention is described in more detail herein with reference to the accompanying drawings, in which:

Figure 1 is a graphical representation of the different classes of heterogeneous catalysts.
Figure 2 is a schematic diagram illustrating a method of measuring the resistance of a single bead.
Figure 3 is a schematic diagram illustrating a method of measuring resistance in a packed catalyst bed.
Figure 4 is a schematic illustrating voltage drop measurement.
Figures 5A and 5B illustrate a comparison of the conductivities of fresh and used catalysts.
Figures 6A and 6B illustrate a comparison of the conductivies of fresh, regenerated and used hydrotreating catalyst.
Figure 7 is a representative DME kinetic plot.
Figures 8A and 8B are graphical representations of a comparison of the conductivity of unused vs. exhausted aluminum oxide catalyst 1.
Figure 9 is a comparison of the conductivities of unused and exhausted Aluminum oxide catalyst 2 as measured on a single bead.

## DESCRIPTION OF THE PREFERRED EMBODIMENTS

The present invention is concerned with easy monitoring methods to follow and interpret chemical and/or physical reactions on the surface and/or in the bulk of heterogeneous catalysts.

Heterogeneous catalysts are extensively used in industry. They are classified traditionally as a) conductors, b) semiconductors, and c) insulators, but a large number of catalyst are mixtures of a, b and/or c. The difference between insulators, semiconductors and conductors is due to the ability of their electrons to move and transfer the electric current. Basically, electrons around the atom nuclei are at different energy levels. The highest energy level corresponds to the outermost or valence electrons. This upper occupied band is called the valence band. In an insulator, the valence band is full and the energy gap between the top of the valence band and the next allowed band is so large (a few eVs, e.g. 6 eVs for diamond) that even large amounts of energy can not move the valence electrons to the conduction band.

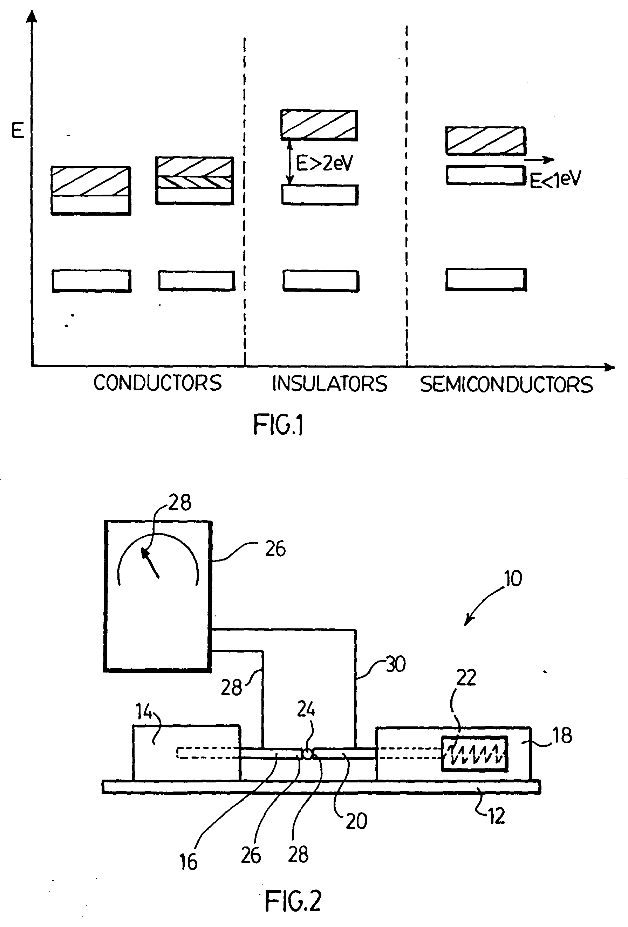

The conduction band is the energy level at which the electrons can conduct electric currents. In a conductor, the uppermost occupied level is very close to the conduction band. Therefore, an applied voltage can easily drive the electrons to a conduction band. In a semiconductor, the energy gap between the uppermost occupied level and the conduction band is small (less than 1 eV) and the electrons in the valence band, which is full, can go to the conduction band with a small amount of energy, such as heat or light. Figure 1 shows graphically the different classes. There are intrinsic semiconductors, such as pure germanium, which show this behavior. By adding small amount of impurities called dopants to a semiconductor material, different semiconductors can be made. If the impurities supply extra electrons, the semiconductor is called a donor or n-type and if they can accept electrons from the valence band, a p-type semiconductor is produced. The addition of both types of impurities results in a mixed-type semiconductor.

With recent developments, a fourth catalyst class of transition or rare earth metal complexes (e.g. metallocenes) has to be considered. Catalysts, especially metals of transition metal complexes are often used on a carrier. The carrier can be inactive or can participate in the catalytic process. This latter is called a promoter. Examples of the various types are given in Table 2.

TABLE 2

| EXAMPLES OF CATALYSTS | | |
|---|---|---|
| METALS | USE | REFERENCE |
| Ag | Dehydrogenation of methanol | A. Aicher, H.Haas, H. Diem, C. Dudeck, F. Brunnmuller and G. Lehmann, UK Patent, 1,526,245 (1978); German Patent 2,444,586 (1976). |
| Fe-Co Alloys | Dehydrogenation of cyclohexane | Materials Science and Engineering, A204, 186-192, 1995, Elsevier Science S.A., Lausanne, Switzerland. |
| Ir | Reforming catalyst | Farrauto R. J., and Bartholomew C. H., *Fundamentals of Industrial Catalytic Processes,* Blackie Academic & Professional, 557, (1997). |
| | | |
| Pt | Ammonia oxidation | Farrauto R. J., and Bartholomew C. H., *Fundamentals of Industrial Catalytic Processes,* Blackie Academic & Professional, 480, (1997). |
| Pt-Ir (bimetallic) | Dehydrogenation of methylcyclohexane to toluene | Moser, W. R., Knapton, J. A., Koslowski C. C., Rozak, J. R., and Vezis, R. H. (1994). *Catal. Today,* 21, 157. |
| Pt-Sn (bimetallic) | Dehydrogenation of methylcyclohexane to toluene | Moser, W. R., Knapton, J. A., Koslowski, C. C., Rozak, J. R., and Vezis, R. H. (1994). *Catal. Today,* 21, 157. |
| Re, Ru | Organic acids to alcohols | Farrauto R. J., and Bartholomew C. H., *Fundamentals of Industrial Catalytic Processes,* Blackie Academic & Professional, 413, (1997). |
| Rh | Nitriles to secondary amines | Farrauto R. J., and Bartholomew C. H., *Fundamentals of Industrial Catalytic Processes,* Blackie Academic & Professional, 414, (1997). |
| Ni | Hydrogenation of alkenes | Farrauto R. J., and Bartholomew C. H., *Fundamentals of Industrial Catalytic Processes,* Blackie Academic & Professional, 417, (1997). |
| Cu | Hydrogenation of nitrobenzene | Farrauto R. J., and Bartholomew C. H., *Fundamentals of Industrial Catalytic Processes,* Blackie Academic & Professional 417,(1997) |
| | | |
| METALS | USE | REFERENCE |
| Al | Dehydration of alcohols | Farrauto R. J., and Bartholomew C. H., *Fundamentals of Industrial Catalytic Processes,* Blackie Academic & Professional, 417, (1997). |
| Pt, W | Decomposition of $N_2O$, $NH_3$ Oxidation of $SO_2$ | Lecture notes, University of Western Ontario |
| Pd, Pt | Oxidation of $H_2$ | Lecture notes, University of Western Ontario |
| Co | Steam reforming | Twigg, Martyn V. *Catalyst Handbook,* 2$^{nd}$ Ed., 244 (1996). |

TABLE 2 (continued)

| INSULATORS | USE | REFERENCE |
|---|---|---|
| MO$_2$C | Dehydrogenation of hydrocarbons | Bevan, D. J. M., and Kordis, *J (1964). J. Inorg. Nucl. Chem., 26,* 1509. |
| Glass | Oxidation of NO | Lecture notes, University of Western Ontario |
| Boric Acid | Oxidation of n-paraffin | Thomas C. L., *Catalytic Processes and Proven Catalysts,* Academic Press, 196, (1970). |
| MgO | Benzoic acid to phenol | Thomas C. L., *Catalytic Processes and Proven Catalysts,* Academic Press, 195, (1970). |
| γ-Al$_2$O$_3$ | Dehydration of alcohols to Olefinic hydrocarbons | Thomas C. L., *Catalytic Processes and Proven Catalysts,* Academic Press, 36, (1970). |
| SiO$_2$-Al$_2$O$_3$ | Alcohols to amines | Thomas C. L., *Catalytic Processes and Proven Catalysts,* Academic Press, 228, (1970). |
| SiO$_2$-MgO | Hydrocracking | Thomas C. L., *Catalytic Processes and Proven Catalysts,* Academic Press, 176, (1970). |
| BaO | Dehydrochlorination | Thomas C. L., *Catalytic Processes and Proven Catalysts,* Academic Press, 234, (1970). |
| | | |
| SEMICONDUCTORS | USE | REFERENCE |
| V$_2$O$_5$ | Oxidation of SO$_2$ | Farrauto R. J., and Bartholomew C. H., *Fundamentals of Industrial Catalytic Processes,* Blackie Academic & Professional, 475-477, (1997). |
| NiS-WS$_3$ | Hydrogenation of Butene | Lecture notes, University of Western Ontario. |
| Si, Ge (doped with B or Ga) | | Lecture notes, University of Western Ontario. |
| TRANSITION METAL COMPLEXES | USE | REFERENCE |
| RhCl (PPh$_3$)$_3$ Wilkinson catalyst | Alkene hydrogenation | Farrauto R. J., and Bartholomew C. H., *Fundamentals of Industrial Catalytic Processes,* Blackie Academic & Professional, 675, (1997). |
| Metallocenes | Polymerization (Polyethylene, Polypropylene, Polybutadiene etc.) | Brintzinger et. al., Angew. Chem, Int. Ed. 34, 1143-1170, (1995). |
| HRh(CO)(P(C$_6$H5)$_3$)$_3$ | Oxo Process | Farrauto R. J., and Bartholomew C. H., *Fundamentals of Industrial Catalytic Processes,* Blackie Academic & Professional, 679, (1997). |

We have surprisingly found that the electrical conductivity of selected catalysts changes dramatically due to exhaustion and goes back nearly to the original value upon regeneration. The data presented herein and detailed in the examples below demonstrate that coking on the surface of catalysts is not the exclusive cause of the measured conductivity changes, and that the novel method of the present invention is sensitive enough to detect subtle changes on the surface and/or in the bulk of activated charcoal. The electrical property which is measured and which relates to electrical conductivity of commercial catalysts may be measured by the following preferred two methods. One method measures the resistance of a single bead as shown in Figure 2.

A representative method for measuring a resistance of a single bead is shown in Figure 2. The device 10 comprises a base 12 of suitable rigid material such as "Plexiglas" mounted on the base is a support 14 for fixing the position of a conductive rod 16 which may be of stainless steel. A second standard 18 is mounted on the base 12 and supports a conductive rod 20 which is spring loaded by way of compression spring 22. The sample to be tested, which is normally in particle form, is shown at 24 and is captured between the end portions 26 and 28 of the respective rods 16 and 20. The conductivity of the catalyst particle is measured by way of a conductivity measurement device 26. The device 26 has its two terminals 28 and 30 connected to the conductive rods 16 and 20. The conductivity measurement device include a visual display 28 to provide the operator with a readout on the conductivity.

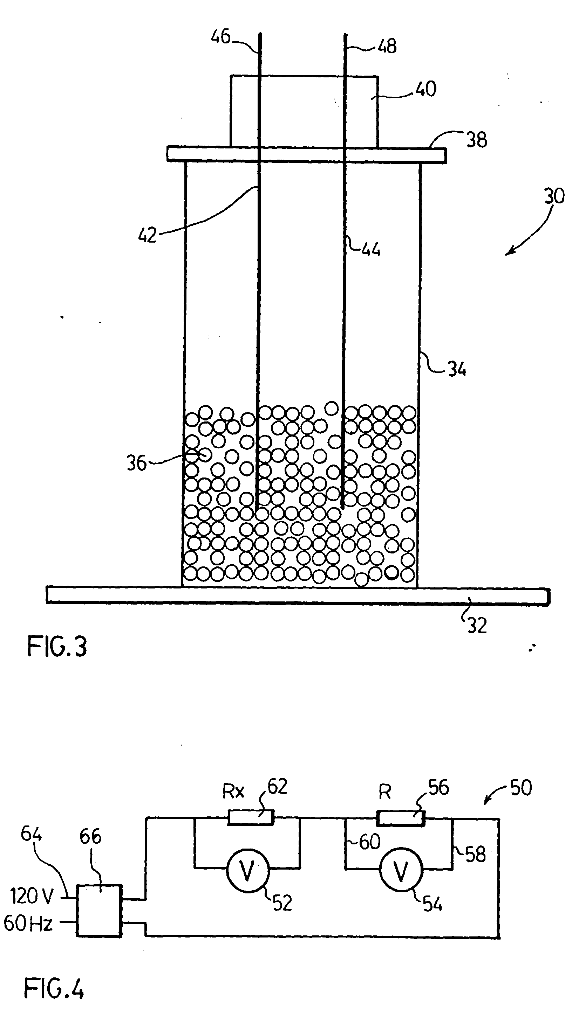

The device of Figure 3 is provided for measuring the conductivity of a bulk sample of catalyst. A support 32 is provided for a container 34 which contains the bulk catalyst 36. The container has a lid 38 with a cylindrical land 40. The land supports and has extending there through electrodes 42 and 44. The electrodes extend down into the bed of catalyst 36. The terminals 46 and 48 are connected to a suitable conductivity measuring device.

As shown in Figure 4, a device 50 is schematically shown for measuring voltage drop. This device is compared to a standard system for measuring resistivity. Voltage meters 52 and 54 are provided for measuring the voltage drop across a catalyst particle or catalyst bed 56. The voltage meter has the electrodes 58 and 60 which may be connected to the electrical wires 28 and 30 of Figure 2 for measuring voltage drop or electrodes 46 and 48 of Figure 3. Voltage meter 52 measures the voltage drop across a resistor 62 having a known resistance value. Power for the circuitry is delivered via AC lines 64 which is then stabilized to a voltage of 120 volts and 60 hertz by way of stabilizer 66. A comparison of the voltage drop across the known resistance 62 and the catalyst particle 56 provides a measurement for the voltage drop across the catalyst.

The following abbreviations will be used to describe the various methods:

RS = direct resistance measurement, single bead
RP = direct resistance measurement, packed bed
VS = voltage drop measurement, single bead
VP = voltage drop measurement, packed bed

In the case of voltage drop measurements, the resistance is obtained from calibration curves constructed by using known resistors as $R_x$, to account for the internal impedance of the electrometer (Keithley Model 600 B).

The direct resistance measurement and the voltage drop measurement yield identical values within experimental error as expected. The resistance in a packed bed is a combination of the resistance of the catalyst beads and the voids (in this case air). The specific conductivity $\sigma *$ [$Scm^{-1}$ or $\Omega^{-1}cm^{-1}$] is calculated from equation 1:

$$R = (\sigma*)^{-1}L/A \qquad\qquad [1]$$

where R is the resistance and L and A are the length and the cross section of the resistor in cm and $cm^2$, respectively. In case of a single bead average bead dimensions are used; in case of the packed bed L is the distance of the parallel plates (L = 1.2 cm) and A is the surface of the electrodes immersed in the bed (A = 4 $cm^2$). The change in conductivity from fresh to used catalysts is very large (100% to several order of magnitude). The conductivity of regenerated catalyst samples are nearly identical to that of the fresh samples.

The change may be due to the appearance of conductive species such as ions and/or carbon. Upon regeneration, the carbon is burned, while the ionic species may be reduced to less ionic or neutral metallic species, ready to catalyze the specific reactions again. Conductivity measurements do not differentiate between conductive species, but from the practical point of view it is enough to pinpoint a change signaling catalyst exhaustion. This change is specific to the catalyst, reaction conditions and parameters such as flow pattern of fluidization regimes. This method applies to any type of heterogeneous catalyst where an electrical surface property of the catalyst can be measured. Exemplary types of catalysts include zeolytes, silicalites, precious metal catalysts such as platinum or palladium, activated carbon, transition metal catalysts, and the like. In order to establish the correlation of measured conductivity to catalyst activity, one generally measures conductivity of fresh catalyst and compares the conductivity measurements obtained as the catalyst is gradually used and exhausted.

As mentioned above, this measurement conceivably can be used to measure voidage in a fixed bed. In a fixed bed, one can a) measure the resistivity of a single particle, b) measure the resistivity in a packed bed, and c) correlate the difference with voidage.

This measurement can also be used to predict the movement of a reaction (adsorption) front in a fixed bed. A number of electrodes are placed along the bed and the change in resistivity is monitored to predict the reaction front.

The catalyst specific surface can be predicted by measuring the change in resistivity of a single bead or measuring the change in the active surface area (e.g. analysis of reaction products) and correlating the two measurements.

To check the type of adsorption (mono-layer or multi-layer) the change in resistivity is monitored and the stepwise change in resistivity is correlated to the number of adsorbed layer.

This system can also be used to control catalytic fixed bed reactors. To do this, the change in resistivity during the reaction is measured and the process is calibrated for the given reaction. Deviation from the expected values will be due to the side reaction, poisoning etc.

**EXAMPLES**

Since the direct resistance and voltage drop measurements provide similar results, the results obtained by these two methods are presented only in Example 1. The catalysts used in industrial units are usually subjected to uneven temperature distribution, deposition of side products, occurrence of side reactions etc. Therefore individual catalyst particles might show relatively large variations in their properties. Thus, the relatively high standard deviation found in certain samples with single bead measurements might be construed as an indicator of uneven process conditions within a catalyst bed. In case of packed bed measurements, the standard deviation is small as the errors arising from the individual measurements are averaged out. These examples are described solely for purposes of illustration and are not intended to limit the scope of the invention.

**EXAMPLE 1.**

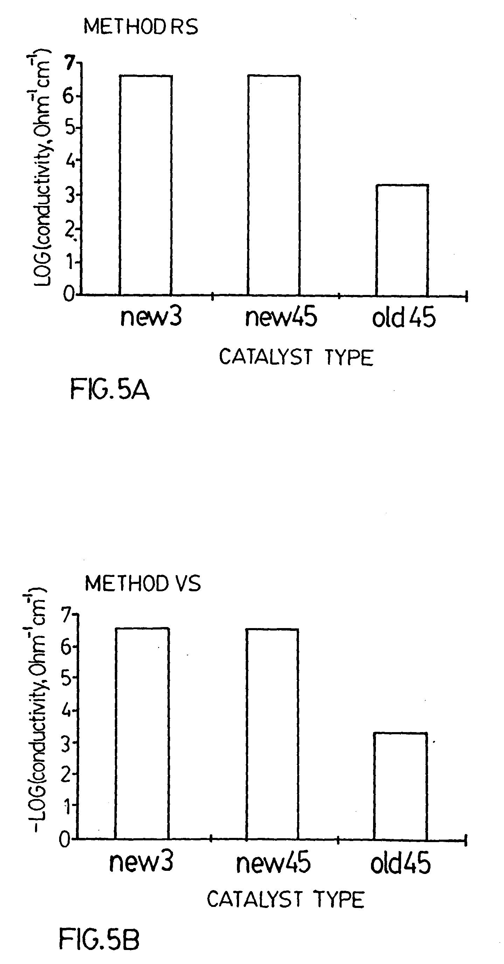

A commercial catalyst used for the dehydrogenation of ethyl benzene to produce styrene was investigated. These examples are labeled as "New 3, New 045 and Old 045". These types of catalysts are iron oxide based, containing $K_2Fe_{22}O_{34}$, with about 50% Fe content. The spent catalyst contains $Fe_2O_3$ and $K_2CO_3$ (50% Fe and 8-10 % K). The conductivity of the fresh catalyst was RS = 2.44 x $10^{-7}$ and VS = 2.42 x $10^{-7}$ [$\Omega^{-1}cm^{-1}$] (all the conductivity values specified in the Examples are average values often measurements) measured on a single cylindrical bead (L = 0.56 cm; A = 0.056 cm$^2$). This compares well with values published in the literature for iron oxides (M.A. Mousa, E.A. Gomaa, A.A. El-Khouly and A.A.M. Aly: Mater. Chem. Phys. 11, 433 (1984)). The conductivity of the spent catalyst dropped to RS = 4.66 x $10^{-4}$ and VS = 4.98 x $10^{-4}$ [$\Omega^{-1}cm^{-1}$] which is a three orders of magnitude change. The data are summarized in the Tables 3A and 3B, and the comparison is shown graphically in Figure 5.

TABLE 3A

| Conductivity Data of Potassium-promoted Iron-oxide Catalyst Direct Resistance Measurement - Single bead - RS | | | |
|---|---|---|---|
| Test # | New 3, $(\Omega\text{-cm})^{-1}$ x $10^{-7}$ | New 045, $(\Omega\text{-cm})^{-1}$ x $10^{-7}$ | Old 045, $(\Omega\text{-cm})^{-1}$ x $10^{-4}$ |
| 1 | 3.33 | 2.45 | 4.65 |
| 2 | 2.46 | 2.95 | 4.86 |
| 3 | 1.84 | 2.32 | 5.42 |
| 4 | 2.38 | 2.21 | 5.99 |
| 5 | 2.77 | 2.94 | 4.70 |
| 6 | 2.84 | 2.36 | 4.65 |
| 7 | 2.45 | 2.34 | 3.96 |
| 8 | 2.02 | 2.05 | 4.95 |
| 9 | 1.95 | 2.55 | 3.77 |
| 10 | 2.37 | 2.04 | 3.66 |
| STDEV | 0.45 | 0.32 | 0.73 |
| Average | 2.44 | 2.42 | 4.66 |

TABLE 3B

| Voltage Drop Measurement, Single bead - VS | | | |
|---|---|---|---|
| Test # | New 3, $(\Omega\text{-cm})^{-1}$ x $10^{-7}$ | New 045, $(\Omega\text{-cm})^{-1}$ x $10^{-7}$ | Old 045, $(\Omega\text{-cm})^{-1}$ x $10^{-4}$ |
| 1 | 2.71 | 2.25 | 5.63 |
| 2 | 2.42 | 2.71 | 5.49 |

TABLE 3B (continued)

| Voltage Drop Measurement, Single bead - VS | | | |
|---|---|---|---|
| Test # | New 3, $(\Omega\text{-cm})^{-1}$ x $10^{-7}$ | New 045, $(\Omega\text{-cm})^{-1}$ x $10^{-7}$ | Old 045, $(\Omega\text{-cm})^{-1}$ x $10^{-4}$ |
| 3 | 3.06 | 2.86 | 4.58 |
| 4 | 2.83 | 2.65 | 4.60 |
| 5 | 2.25 | 3.19 | 4.39 |
| 6 | 2.33 | 2.32 | 4.22 |
| 7 | 2.20 | 3.14 | 4.81 |
| 8 | 2.08 | 2.49 | 5.38 |
| 9 | 2.56 | 2.84 | 5.22 |
| 10 | 2.54 | 3.00 | 5.45 |
| STDEV | 0.30 | 0.32 | 0.52 |
| Average | 2.50 | 2.75 | 4.98 |

**EXAMPLE 2.**

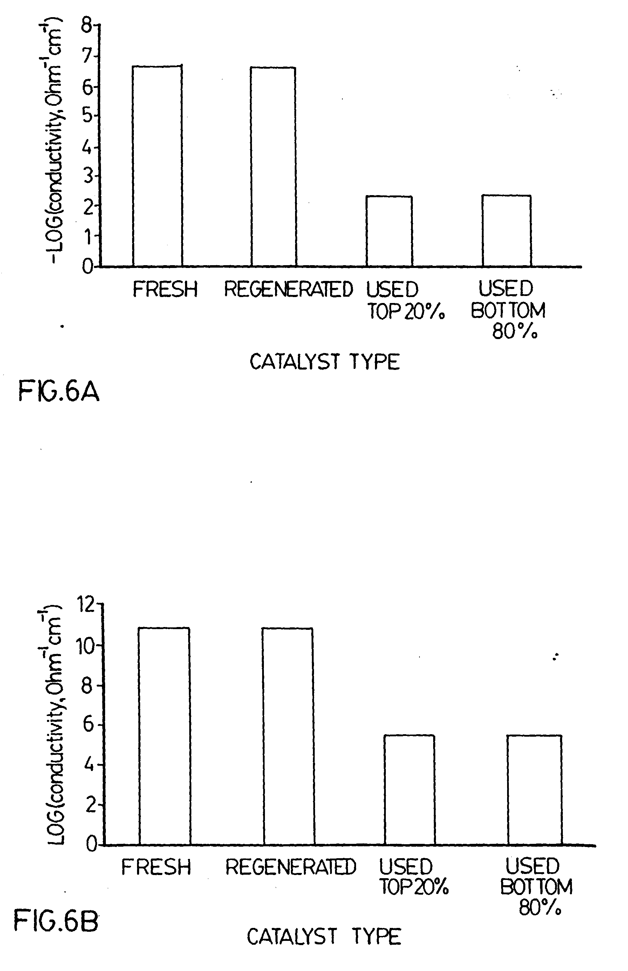

A commercial hydrotreating catalyst was investigated. These type of catalysts are alumina based, containing Ni - Mo or Co-Mo and used to remove sulfur and nitrogen from crude oil distillates such as gasoline or gas oil. The conductivity of the fresh catalyst was RS = $2.01 \times 10^{-7}$ and VS = $2.12 \times 10^{-7}$ [$\Omega^{-1}cm^{-1}$] on a single bead (L = 0.57 cm; A = 0.01 cm$^2$), and RP = $1.43 \times 10^{-11}$ and VP = $1.28 \times 10^{-11}$ [$\Omega^{-1}cm^{-1}$] in a packed bed. The conductivity of the used catalyst (samples taken from the top and the bottom of a commercial reactor) was measured to be several order of magnitudes higher than that of the fresh catalyst - RS = $5.34 \times 10^{-3}$, VS = $5.11 \times 10^{-3}$; RP = $2.54 \times 10^{-6}$ and VP = $2.51 \times 10^{-6}$ [$\Omega^{-1}cm^{-1}$]. The conductivity of the regenerated catalyst, on the other hand, was practically equal to the fresh catalyst - RS = $2.22 \times 10^{-7}$; VS = $2.41 \times 10^{-7}$; RP = $1.75 \times 10^{-11}$; and VP = $1.30 \times 10^{-11}$ [$\Omega^{-1}cm^{-1}$]. The data are summarized in Tables 4A amd 4B, and the comparison is shown graphically in Figure 6. The huge differences between the conductivity of unused and spent catalyst demonstrate the utility of the method for indicating catalyst exhaustion.

TABLE 4A

| Voltage Drop Measurement, Single bead - VS | | | |
|---|---|---|---|
| Test # | Fresh, $(\Omega\text{-cm})^{-1}$ x $10^{-7}$ | Regenerated $(\Omega\text{-cm})^{-1}$ x $10^{-7}$ | Used top 20% $(\Omega\text{-cm})^{-1}$ x $10^{-3}$ | Used bottom 80% $(\Omega\text{-cm})^{-1}$ x $10^{-3}$ |
| v1 | 2.21 | 2.83 | 6.21 | 4.40 |
| 2 | 2.39 | 2.38 | 6.00 | 4.86 |
| 3 | 2.43 | 2.51 | 6.86 | 4.08 |
| 4 | 2.20 | 2.43 | 5.53 | 3.97 |
| 5 | 1.93 | 1.90 | 4.47 | 3.81 |
| 6 | 2.00 | 2.08 | 4.86 | 4.95 |
| 7 | 2.23 | 2.39 | 3.85 | 5.15 |
| 8 | 1.91 | 2.65 | 4.05 | 4.82 |
| 9 | 2.04 | 2.50 | 5.48 | 5.44 |
| 10 | 1.84 | 2.41 | 3.78 | 4.46 |
| STDEV | 0.20 | 0.26 | 1.07 | 0.54 |
| Average | 2.12 | 2.41 | 5.11 | 4.59 |

TABLE 4B

| Voltage drop Measurement - Packed bed - VP | | | | |
|---|---|---|---|---|
| Test # | Fresh, $(\Omega\text{-cm})^{-1}$ x $10^{-11}$ | Regenerated $(\Omega\text{-cm})^{-1}$ x $10^{-11}$ | Used top 20% $(\Omega\text{-cm})^{-1}$ x $10^{-6}$ | Used bottom 80% $(\Omega\text{-cm})^{-1}$ x $10^{-6}$ |
| 1 | 1.15 | 1.31 | 2.35 | 2.15 |
| 2 | 1.46 | 1.20 | 2.21 | 2.55 |
| 3 | 1.49 | 1.09 | 2.66 | 2.61 |
| 4 | 1.46 | 1.08 | 2.58 | 2.54 |
| 5 | 1.25 | 1.26 | 2.82 | 2.36 |
| 6 | 1.09 | 1.26 | 2.31 | 2.09 |
| 7 | 0.99 | 1.35 | 2.90 | 2.78 |
| 8 | 1.27 | 1.42 | 2.72 | 2.68 |
| 9 | 1.31 | 1.53 | 2.46 | 2.33 |
| 10 | 1.30 | 1.52 | 2.08 | 2.41 |
| STDEV | 0.17 | 0.16 | 0.27 | 0.22 |
| Average | 1.28 | 1.30 | 2.51 | 2.45 |

EXAMPLE 3

A commercial $Al_2O_3$ Aluminum oxide catalyst "1" was investigated. This catalyst was found to catalyze the hydrolysis of methyl chloride, forming methanol ($CH_3OH$ MeOH) and/or dimethyl ether ($CH_3 - O - CH_3$, DME) according to the following reactions:

$$CH_3Cl + H_2O \xrightarrow{catalyst} CH_3OH$$

$$CH_3OH \xrightarrow{catalyst} CH_3\text{-}O\text{-}H$$

These reactions proceed at high temperature. The formation of these compounds can be followed by gas chromatography. Table 5 shows data at various temperatures.

TABLE 5

| Threshold temperature measurements | | | |
|---|---|---|---|
| Sample ID | Temperature | % DME | % $CH_3OH$ |
| 97 DL 296 | 70 | Nil | 0.0043 |
| 297 | 90 | Nil | 0.0034 |
| 298 | 110 | Nil | 0.0032 |
| 299 | 130 | 0.0019 | 0.0073 |
| 300 | 150 | 0.0114 | 0.210 |
| 301 | 170 | 0.0327 | 0.0440 |
| 302 | 190 | 0.0668 | 0.0506 |

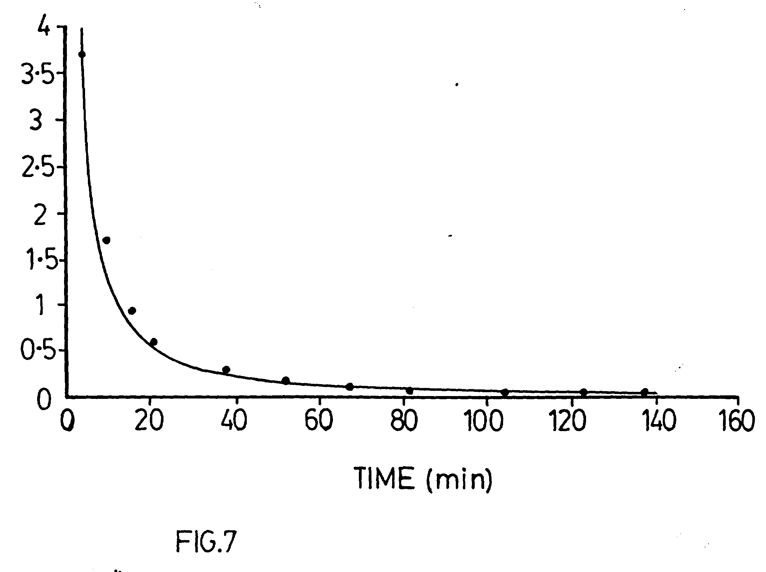

A representative DME kinetic plot is shown in Figure 7. Decreasing DME formation with time demonstrates the disappearance of catalytic sites.

When no more DME is formed, the catalyst is exhausted. We have found a correlation between the conductivity and the activity of this catalyst when used in an industrial unit.

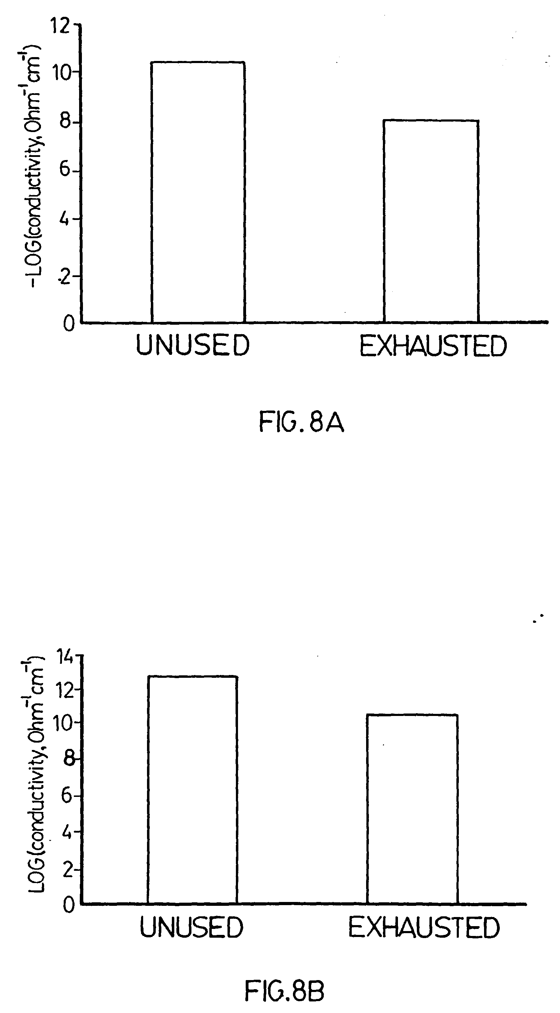

Using samples from an industrial reactor, the conductivity of the unused catalyst was RS = $2.45 \times 10^{-9}$ and VS = $2.91 \times 10^{-11}$ on a single bead. The conductivity of the exhausted catalyst was measured to be more than two orders of magnitude higher than that of the unused catalyst RS = $11.7 \times 10^{-9}$, VS = $12.4 \times 10^{-9}$. The data are summarized in Tables 6A and 6B and the comparison is shown in Figure 8A.

The same $Al_2O_3$ catalyst was also investigated using a packed bed configuration. The average conductivity of the unused catalyst was VP = $1.98 \times 10^{-13}$ [$\Omega^{-1}cm^{-1}$] versus $2.80 \times 10^{-11}$ [$\Omega^{-1}cm^{-1}$] for the exhausted catalyst. The data are summarized in Table 6 and the comparison is shown graphically in Figure 8B.

Large standard deviation obtained on single catalyst beads turned out to be very small in packed bed measurements. This is most probably due to local conditions and precipitation of side products on catalyst beads.

TABLE 6A

| Alumina Catalyst 1 Voltage Drop Measurement, Single bead - VS | | |
|---|---|---|
| Test # | Unused $(\Omega\text{-cm})^{-1} \times 10^{11}$ | Exhausted $(\Omega\text{-cm})^{-1} \times 10^{9}$ |
| 1 | 1.25 | 3.47 |
| 2 | 5.56 | 9.62 |
| 3 | 10.00 | 7.58 |
| 4 | 0.81 | 20.83 |
| 5 | 1.04 | 9.62 |
| 6 | 0.27 | 5.56 |
| 7 | 1.47 | 4.90 |
| 8 | 2.19 | 6.94 |
| 9 | 2.12 | 3.42 |
| 10 | 4.39 | 52.08 |
| STDEV | 2.99 | 14.82 |
| Average | 1.07 | 8.09 |

TABLE 6B

| Alumina catalyst 1 Voltage drop measurement - Packed bed - VP | | |
|---|---|---|
| Test # | Unused $(\Omega\text{-cm})^{-1} \times 10^{-13}$ | Exhausted $(\Omega\text{-cm})^{-1} \times 10^{-11}$ |
| 1 | 1.91 | 2.69 |
| 2 | 1.91 | 2.45 |
| 3 | 1.66 | 2.63 |
| 4 | 1.78 | 2.69 |
| 5 | 1.66 | 2.63 |
| 6 | 1.91 | 2.63 |
| 7 | 1.91 | 2.63 |

TABLE 6B (continued)

| Alumina catalyst 1<br>Voltage drop measurement - Packed bed - VP | | |
|---|---|---|
| Test # | Unused $(\Omega\text{-cm})^{-1}$ x $10^{-13}$ | Exhausted $(\Omega\text{-cm})^{-1}$ x $10^{-11}$ |
| 8 | 1.78 | 2.34 |
| 9 | 1.78 | 2.51 |
| 10 | 1.91 | 2.45 |
| STDEV | 0.10 | 0.12 |
| Average | 1.98 | 2.80 |

EXAMPLE 4.

Another commercial $Al_2O_3$ (Aluminum oxide catalyst 2) catalyst that catalyzes the hydrolysis of methyl chloride, (forming MeOH and/or DME) was also investigated.

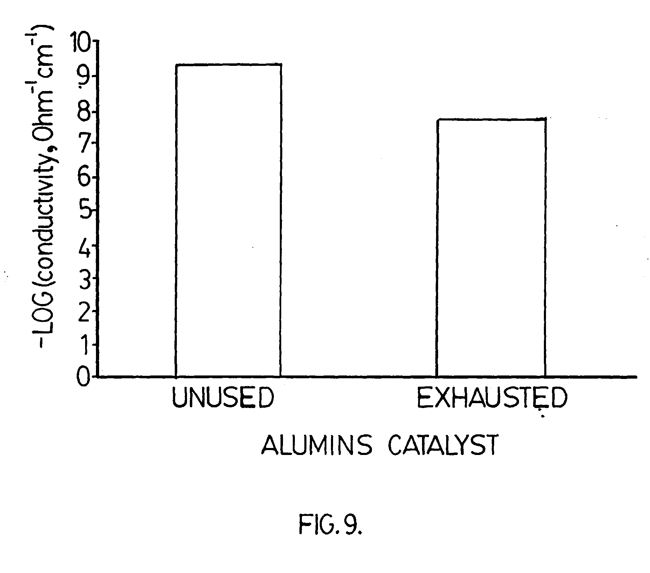

The conductivity of the unused catalyst was RS = 9.54 x $10^{-9}$ and VS = 9.37 X $10^{-9}$ $[\Omega^{-1}cm^{-1}]$ on a single bead. The conductivity of the exhausted catalyst was measured to be two order of magnitudes higher than that of the unused catalyst - RS 7.67 x $10^{-7}$; VS = 7.64 x $10^{-3}$ $[\Omega^{-1}cm^{-1}]$. The data are summarized in Table 7 and the comparison is shown in Figure 9.

TABLE 7

| Alumina Catalyst 2<br>Voltage Drop Measurement, Single bead - VS | | |
|---|---|---|
| Test # | Unused $(\Omega\text{-cm})^{-1}$ x $10^8$ | Exhausted $(\Omega\text{-cm})^{-1}$ x $10^7$ |
| 1 | 9.37 | 7.26 |
| 2 | 9.10 | 7.93 |
| 3 | 9.86 | 6.72 |
| 4 | 8.88 | 8.00 |
| 5 | 9.41 | 7.65 |
| 6 | 9.28 | 7.86 |
| 7 | 9.56 | 7.62 |
| 8 | 9.33 | 7.80 |
| 9 | 9.55 | 7.57 |
| 10 | 9.24 | 7.63 |
| STDEV | 0.269 | 0.375 |
| Average | 9.37 | 7.64 |

The huge difference between the conductivity of unused and exhausted catalyst demonstrate the utility of the method for indicating catalyst exhaustion.

Although preferred embodiments of the invention have been described herein in detail, it will be understood by those skilled in the art that variations may be made thereto without departing from the spirit of the invention or scope of the appended claims.

**Claims**

1.  A method for evaluating the catalytic activity of a heterogeneous particulate catalyst, the method comprising monitoring electrical conductivity of said particulate catalyst.

2.  A method of claim 1, wherein said step of monitoring conductivity of said particulate catalyst comprises measuring an electrical property of said particulate catalyst which relates to conductivity.

3.  A method of claim 1 or 2, wherein said electrical conductivity of said particulate catalyst is monitored over time to determine a change in electrical conductivity of said catalyst, correlating a change in conductivity with a decrease in catalytic activity and correlating an opposite change in conductivity with an increase in catalytic activity.

4.  A method according to one or more of the claims 1-3, wherein said electrical property is measured "in situ" of a catalytic reactor.

5.  A method according to one or more of the claims 1-3, wherein said electrical property is measured "in situ" of a catalyst regenerator.

6.  A method according to one or more of the claims 1-5, wherein said particulate catalyst is selected from the group consisting of electrically conductive catalytic material, electrically insulative catalytic material and electrically semi-conductive catalytic material.

7.  An apparatus for assessing electrical conductivity of a particulate catalyst to determine catalyst activity, said apparatus comprising:

    i) means for monitoring electrical conductivity of said particulate catalyst; and
    ii) means for correlating monitored conductivity with catalyst activity.

8.  An apparatus of claim 7 wherein said monitoring means comprises spaced apart electrodes in contact with particulate catalyst.

9.  An apparatus of claim 7 or 8 wherein said correlating means includes a programmable means for generating catalyst activity information based on monitored value for conductivity.

10. A catalytic reactor having an apparatus according to one or more of the claims 7-9 for monitoring catalytic activity in said reactor.

11. A catalyst regenerator having an apparatus according to one or more of the claims 7-9 for monitoring catalytic activity during a catalyst regeneration cycle.

12. A processor for correlating catalyst activity with measured surface electrical conductivity of particulate catalyst comprising:

    i) means for receiving a signal representative of surface electrical conductivity, and
    ii) programmable means for generating catalyst activity information based on monitored value for conductivity.

E

E>2eV

E<1eV

CONDUCTORS    INSULATORS    SEMICONDUCTORS

FIG.1

28

26

10

28

30

14

24

22

18

16    26    28    20    12

FIG.2

FIG.3

FIG.4

METHOD RS

FIG.5A

METHOD VS

FIG.5B

FIG.6A

FIG.6B

FIG.7

EP 0 984 274 A2

FIG. 8A

FIG.8B

FIG. 9.